# NEUE EUROPÄISCHE PATENTSCHRIFT

(11) **EP 3 054 042 B2**
(45) Veröffentlichungstag und Bekanntmachung des Hinweises auf die Entscheidung über den Einspruch: **02.11.2022**
(45) Hinweis auf die Patenterteilung: 11.04.2018
(21) Anmeldenummer: 15153790.9
(22) Anmeldetag: 04.02.2015
(51) Int. Cl.: B32B 5/02, B32B 5/26, D04H 3/018, D04H 3/147, B32B 5/12, B32B 5/10, B32B 5/06, B32B 5/08, D04H 3/016, D04H 3/16

(54) **Verfahren zur Herstellung eines Laminates und Laminat**
Method for manufacturing a laminate and laminate
Procédé de fabrication d'un laminé et laminé

(43) Veröffentlichungstag der Anmeldung: 10.08.2016
(73) Patentinhaber: Reifenhäuser GmbH & Co. KG Maschinenfabrik, 53844 Troisdorf (DE); Fibertex Personal Care A/S, 9220 Aalborg (DK)
(72) Erfinder: Sommer, Sebastian, 53844 Troisdorf (DE); Hansen, Morten Rise, 9000 Aalborg (DK); Axelsen, Mikael Staal, 9320 Hjallerup (DK)
(74) Vertreter: Andrejewski - Honke Patent- und Rechtsanwälte Partnerschaft mbB

(56) Entgegenhaltungen:
- EP-A1- 2 116 367
- EP-A2- 1 313 538
- WO-A2-02/18693
- WO-A2-02/052085
- JP-A- H04 126 861
- JP-A- H07 197 367
- US-A- 4 761 322
- US-A- 5 382 400
- US-A1- 2002 090 499
- US-A1- 2004 116 024
- S.J.Russell (Ed.), ?Handbook of nonwovens? (CRC2007),pp.168-171
- Hall, David M. et al., ??effect of Crimp on the Tensile and Compressive Properties of Polyester Fibers? Journal of Applied Polymer Science, Vol. 15, 1971
- Kunal, Singha et al., ? Fiber Crimp Distribution in Nonwoven Structure? Frontiers in Science, 2013
- Denver C., Surrao, ?A crimp-like microarchitecture improves tissue production in fibrous ligament scaffolds in response to mechanical stimuli?, Acta Biomaterialia, Vol. 8, 2012

## Beschreibung

Die Erfindung betrifft ein Verfahren zur Herstellung eines Laminates mit zumindest zwei Spinnvlieslagen aus Endlosfilamenten, insbesondere Endlosfilamenten aus thermoplastischem Kunststoff. Gegenstand der Erfindung ist weiterhin ein Laminat mit zumindest zwei Spinnvlieslagen aus Endlosfilamenten. - Endlosfilamente unterscheiden sich bekanntlich aufgrund ihrer quasi endlosen Länge von Stapelfasern, die viel geringere Längen von beispielsweise 10 mm bis 60 mm aufweisen. Es liegt im Rahmen der Erfindung, dass die Endlosfilamente für die Spinnvlieslagen des erfindungsgemäßen Laminates mit zumindest einer Spinneinrichtung bzw. mit zumindest einer Spinnerette erzeugt werden.

Verfahren zur Herstellung von Laminaten aus Spinnvliesen sind aus der Praxis und aus dem Stand der Technik in verschiedenen Ausführungsformen bekannt. Vor allem für Hygieneanwendungen sind Spinnvlieslaminate bzw. Spinnvliese mit ausreichender Weichheit erwünscht. Dabei ist es bekannt, die Weichheit eines Spinnvlieses durch den Einsatz von latent kräuselnden Endlosfilamenten zu erhöhen.

Die WO 02/052085 A2 beschreibt beispielsweise ein Vlieslaminat aus Faserschichten, wobei Schichten von stärker kräuselnden Filamenten und von weniger kräuselnden Filamenten kombiniert werden.

Fernerhin ist es bekannt, Bikomponentenfilamente mit azentrischer Kern-Mantel-Konfiguration als latent kräuselnde Endlosfilamente zu verwenden. Die Weichheit der Spinnvliese kann durch Einsatz von weichen Rohstoffen erhöht werden. Dabei liegt jedoch ein Zielkonflikt vor, weil sehr weiche Spinnvliese gleichzeitig auch mechanisch weich bzw. mechanisch wenig stabil sind und höheren Kräften bzw. Zugkräften nicht ausreichend widerstehen können. Wenn die Spinnvliese zur Erhöhung ihrer Festigkeit beispielsweise mit Kalandern thermisch verfestigt werden, geht dies zu Lasten der Weichheit und Voluminösität der Spinnvliese und es resultiert ein eher flaches aber mechanisch stabiles Spinnvlies. Insoweit konkurrieren bei derartigen Herstellungsmethoden die mechanische Festigkeit bzw. Zugfestigkeit und Dimensionsstabilität des Vlieses mit der Weichheit bzw. Voluminösität des Spinnvlieses. Bei den bekannten Verfahren wird hier in der Regel kein zufriedenstellender Kompromiss erreicht.

Dementsprechend liegt der Erfindung das technische Problem zugrunde, ein Verfahren der eingangs genannten Art anzugeben, mit dem die Herstellung eines Laminates aus Spinnvlieslagen möglich ist, wobei sich das Laminat einerseits durch eine hohe Weichheit und Voluminösität und andererseits durch eine ausreichende Steifigkeit und Festigkeit bzw. Zugfestigkeit auszeichnet. Der Erfindung liegt weiterhin das technische Problem zugrunde, ein entsprechendes Laminat aus Spinnvlieslagen anzugeben.

Zur Lösung des technischen Problems lehrt die Erfindung ein Verfahren zur Herstellung eines Laminates gemäß Patentanspruch 1. Erfindungsgemäß beträgt die Gesamtdicke d des Laminates weniger als 1,5 mm, bevorzugt weniger als 1 mm. Eine besonders bevorzugte Ausführungsform der Erfindung ist dadurch gekennzeichnet, dass die Gesamtdicke d des Laminates 0,2 mm bis 1 mm, empfohlenermaßen 0,3 mm bis 0,8 mm beträgt. - Die Gesamtdicke d des Laminates wird dabei nach DIN EN ISO 9073-2 (Februar 1997) gemessen und zwar nach der Messmethode 5.1 für normale Vliesstoffe. Dabei wird eine runde Auflagefläche von 2500 mm² mit einem Druck von 0,5 kPa stoßfrei gegen die auf einer Bezugsplatte aufliegende Laminatprobe gedrückt. 10 Sekunden nach dem erstmaligen Kontakt der Auflagefläche mit dem Laminat wird der Abstand der beiden Platten als Gesamtdicke d des Laminates gemessen.

Untere Spinnvlieslage meint im Rahmen der Erfindung eine zuerst bzw. früher abgelegte Spinnvlieslage aus Endlosfilamenten und obere Spinnvlieslage meint dagegen eine danach bzw. später auf der unteren Spinnvlieslage abgelegte Spinnvlieslage aus Endlosfilamenten. - Es liegt im Rahmen der Erfindung, dass die zumindest eine erste untere Spinnvlieslage und die zumindest eine zweite obere Spinnvlieslage nach dem Spunbond-Verfahren bzw. als Spunbond-Lagen erzeugt werden. Dazu werden die Endlosfilamente jeweils zunächst aus einem Spinnkopf bzw. aus einer Spinnerette ersponnen. Die ersponnenen Endlosfilamente werden zweckmäßigerweise danach in einer Kühlkammer abgekühlt und in einer Verstreckeinrichtung verstreckt. Die Abkühlung und Verstreckung erfolgt dabei insbesondere in einer kombinierten Abkühl- und Verstreckeinheit. Es empfiehlt sich, dass die Verstreckung der Endlosfilamente als aerodynamische Verstreckung erfolgt. Es liegt im Rahmen der Erfindung, dass das Aggregat aus der Kühlkammer und der Verstreckeinrichtung bzw. die kombinierte Abkühl- und Verstreckeinheit - abgesehen von der Luftzufuhr in der Kühlkammer bzw. Kühleinheit - als geschlossenes System ausgebildet ist. Das bedeutet, dass in diesem Aggregat außer der genannten Luftzufuhr in der Kühlkammer bzw. Kühleinheit keine weitere Luftzufuhr stattfindet. Diese Ausführungsform des geschlossenen Systems hat sich für die Herstellung eines erfindungsgemäßen Laminates besonders bewährt. - Nach einer bevorzugten Ausführungsform der Erfindung werden die abgekühlten und verstreckten Endlosfilamente für die beiden Spinnvlieslagen durch zumindest einen Diffusor geführt und im Anschluss daran auf einer Ablage, insbesondere auf einem Ablagesiebband abgelegt. Zweckmäßigerweise werden zunächst die Endlosfilamente für die erste untere Spinnvlieslage und anschließend die Endlosfilamente für die zweite obere Spinnvlieslage auf der Ablage bzw. auf dem Ablagesiebband abgelegt. Grundsätzlich könnten auch zuerst die Endlosfilamente für die zweite obere Spinnvlieslage auf der Ablage bzw. auf dem Ablagesiebband abgelegt werden und danach die Endlosfilmente der ersten unteren Spinnvliesbahn auf der Ablage bzw. auf dem Ablagesiebband abgelegt werden. - Es liegt im Übrigen im Rahmen der Erfindung, dass zwischen den Spinnvlieslagen (bzw. Spunbond-Lagen) zumindest eine Meltblown-Lage aus Meltblown-Fasern angeordnet wird. Es liegt weiterhin im Rahmen der Erfindung, dass die zumindest eine Meltblown-Lage nicht-kräuselnde Meltblown-Fasern aufweist.

Erfindungsgemäß wird die zumindest eine erste untere Spinnvlieslage mit zumindest einer Heißwalze kompaktiert bzw. vorverfestigt. Dadurch erfolgt also eine Kompaktierung bzw. eine gewisse Verfestigung der ersten unteren Spinnvlieslage. Dabei ist beabsichtigt, die erste untere Spinnvlieslage im Vergleich zur oberen Spinnvlieslage als relativ kompakte, steife und zugfeste Lage auszubilden. Die erste untere Spinnvlieslage soll zweckmäßigerweise die Stabilität des gesamten Laminates vornehmlich bestimmen. Nach einer Ausführungsform der Erfindung ist die Dicke der zumindest einen unteren Spinnvlieslage geringer als die Dicke der darüber angeordneten, zumindest einen zweiten oberen Spinnvlieslage. Es liegt im Rahmen der Erfindung, dass die Dichte der zumindest einen unteren Spinnvlieslage höher bzw. deutlich höher ist als die Dichte der darüber angeordneten, zumindest einen zweiten oberen Spinnvlieslage. Um eine ausreichende Gesamtstabilität bzw. um einen ausreichenden Zusammenhalt des Laminates zu erzielen, werden die zumindest zwei Spinnvlieslagen verfestigt. Dabei können eine Vorverfestigung und eine Endverfestigung stattfinden oder es kann auch lediglich eine Endverfestigung des Lagenaggregates stattfinden.

Das nach dem erfindungsgemäßen Verfahren hergestellte Laminat zeichnet sich zunächst durch eine zufriedenstellende Stabilität bzw. Dimensionsstabilität, insbesondere in Maschinenrichtung aus. Das Laminat ist insgesamt ausreichend kompakt und weist eine ausreichende Steifigkeit auf. Zugleich zeichnet sich das Laminat durch eine verhältnismäßig hohe Weichheit und Voluminösität aus. Dabei wird die Stabilität und Steifigkeit in erster Linie durch die erste untere Spinnvlieslage gewährleistet und die Weichheit bzw. Voluminösität durch die zweite obere Spinnvlieslage. Das Laminat weist weiterhin einen guten Griff und eine vergleichsweise niedrige Dichte auf.

Erfindungsgemäß werden für die erste untere Spinnvlieslage Mehrkomponentenfilamente bzw. Bikomponentenfilamente mit symmetrischer bzw. zentrischer Konfiguration (Querschnittskonfiguration) eingesetzt. Besonders bevorzugt werden dabei Mehrkomponentenfilamente bzw. Bikomponentenfilamente mit zentrischer bzw. symmetrischer Kern-Mantel-Konfiguration verwendet. Grundsätzlich können aber auch andere symmetrische Querschnittskonfigurationen eingesetzt werden, beispielsweise trilobale Konfigurationen und dergleichen. Zweckmäßigerweise bestehen zumindest 85 Gew.-%, vorzugsweise zumindest 90 Gew.-%, bevorzugt zumindest 95 Gew.-% und sehr bevorzugt zumindest 98 Gew.-% der Endlosfilamente der ersten unteren Spinnvlieslage aus Monokomponentenfilamenten und/oder aus den beschriebenen Mehrkomponentenfilamenten bzw. Bikomponentenfilamenten mit symmetrischer Querschnittskonfiguration.

Es empfiehlt sich, dass die Endlosfilamente der ersten unteren Spinnvlieslage aus zumindest einem Polyolefin bzw. im Wesentlichen aus zumindest einem Polyolefin bestehen. Vorzugsweise bestehen die Endlosfilamente der ersten unteren Spinnvlieslage aus Polypropylen und/oder aus Polyethylen bzw. im Wesentlichen aus Polypropylen und/oder Polyethylen. Bei Verwendung von Bikomponentenfilamenten bzw. Mehrkomponentenfilamenten für die Endlosfilamente der ersten unteren Spinnvlieslage besteht zumindest eine Komponente dieser Endlosfilamente aus zumindest einem Polyolefin, vorzugsweise aus Polypropylen und/oder Polyethylen. Eine bevorzugte Ausführungsform des erfindungsgemäßen Verfahrens ist dadurch gekennzeichnet, dass für die erste untere Spinnvlieslage Endlosfilamente bzw. Mehrkomponentenfilamente/Bikomponentenfilamente mit zentrischer Kern-Mantel-Konfiguration verwendet werden. Dabei besteht der Kern zweckmäßigerweise aus Polypropylen und der Mantel bevorzugt aus Polyethylen. Das Gewichtsverhältnis Kern zu Mantel bzw. Polypropylen zu Polyethylen beträgt dabei empfohlenermaßen 50:50 bis 80:20, bevorzugt 70:30. Der Erfindung liegt im Übrigen die Erkenntnis zugrunde, dass ein höherer Polypropylen-Anteil im Kern für die Stabilität des erfindungsgemäßen Laminates sehr hilfreich bzw. wesentlich ist.

Eine besonders empfohlene Ausführungsform der Erfindung ist dadurch gekennzeichnet, dass als Endlosfilamente für die zweite obere Spinnvlieslage Endlosfilamente mit natürlicher Kräuselung bzw. mit latenter Kräuselneigung eingesetzt werden. Zweckmäßigerweise besteht die zweite obere Spinnvlieslage zu mindestens 85 Gew.-%, vorzugsweise zu mindestens 90 Gew.-%, bevorzugt zu mindestens 95 Gew.-% und sehr bevorzugt zu mindestens 98 Gew.-% aus Endlosfilamenten mit natürlicher Kräuselung bzw. mit latenter Kräuselung. - Es liegt im Rahmen der Erfindung, dass in diesen Endlosfilamenten durch Wahl der Rohstoffe und der Prozesseinstellungen eine inhärente Kräuselneigung hervorgerufen wird.

Nach besonders bevorzugter Ausführungsform der Erfindung werden als Endlosfilamente für die zweite obere Spinnvlieslage Mehrkomponentenfilamente bzw. Bikomponentenfilamente mit Seite-Seite-Konfiguration (side-by-side-Konfiguration) eingesetzt. Gemäß einer weiteren Ausführungsform werden Mehrkomponentenfilamente bzw. Bikomponentenfilamente mit azentrischer bzw. unsymmetrischer Querschnittskonfiguration eingesetzt, insbesondere mit azentrischer bzw. unsymmetrischer Kern-Mantel-Konfiguration. Vorzugsweise bestehen die Endlosfilamente für die zweite obere Spinnvlieslage zu mindestens 85 Gew.-%, zweckmäßigerweise zu mindestens 90 Gew.-%, bevorzugt zu mindestens 95 Gew.-% und sehr bevorzugt zu mindestens 98 Gew.-% aus derartigen Filamenten bzw. Mehrkomponentenfilamenten mit Seite-Seite-Konfiguration und/oder azentrischer Querschnittskonfiguration.

Eine bevorzugte Ausführungsform der Erfindung ist dadurch gekennzeichnet, dass zumindest eine Komponente der Mehrkomponentenfilamente bzw. Bikomponentenfilamente für die zweite Spinnvlieslage aus zumindest einem Polyolefin bzw. im Wesentlichen aus zumindest einem Polyolefin besteht. Zweckmäßigerweise bestehen alle Komponenten der Mehrkomponentenfilamente bzw. Bikomponentenfilamente aus zumindest einem Polyolefin bzw. im Wesentlichen aus zumindest einem Polyolefin. Grundsätzlich sind aber auch andere Rohstoffe, insbesondere Polyamid oder Polyethylenterephthalat für die Komponenten möglich. - Bei den Polyolefinen handelt es sich insbesondere um Polypropylen und/oder Polyethylen. Gemäß einer Ausführungsform der Erfindung sind Bikomponentenfilamente in Seite-Seite-Konfiguration für die zweite obere Spinnvlieslage vorgesehen und dabei besteht eine Komponente aus Polypropylen und die andere Komponente aus Polyethylen, wobei das Verhältnis Polypropylen zu Polyethylen 40:60 bis 60:40 beträgt.

Nach einer anderen bevorzugten Ausführungsform der Erfindung werden als Endlosfilamente mit latenter Kräuselneigung für die zweite obere Spinnvlieslage Mehrkomponentenfilamente bzw. Bikomponentenfilamente aus zumindest zwei unterschiedlichen Polypropylenen eingesetzt. Unterschiedliche Polypropylene meint hier und nachfolgend insbesondere Polypropylene mit unterschiedlicher Molmassenverteilung und/oder unterschiedlicher Viskosität und/oder unterschiedlicher Isotaktizität. Als Polypropylene werden bevorzugt Polypropylen-Homopolymere und/oder Polypropylene-Copolymere verwendet. - Gemäß einer empfohlenen Ausführungsform der Erfindung werden für die Endlosfilamente der zweiten Spinnvlieslage Bikomponentenfilamente in Seite-Seite-Konfiguration eingesetzt und dabei bestehen die beiden Komponenten der Bikomponentenfilamente aus unterschiedlichen Polypropylenen. Nach einer weiteren bevorzugten Ausführungsform der Erfindung werden für die Endlosfilamente der zweiten oberen Spinnvlieslage Mehrkomponentenfilamente bzw. Bikomponentenfilamente mit unsymmetrischer Querschnittskonfiguration verwendet und diese Mehrkomponentenfilamente bzw. Bikomponentenfilamente weisen für die einzelnen Komponenten unterschiedliche Polypropylene auf.

Eine Ausführungsform der Erfindung ist dadurch gekennzeichnet, dass die zweite obere Spinnvlieslage mit Hilfe von Heißluft kompaktiert bzw. vorverfestigt wird. Dazu kann insbesondere zumindest ein Heißluftmesser eingesetzt werden, das die zweite obere Spinnvlieslage bevorzugt von oben her beaufschlagt.

Erfindungsgemäß wird die zweite obere Spinnvlieslage mittels zumindest einer Heißwalze (heiße Auslaufwalze) kompaktiert bzw. vorverfestigt, wobei die Temperatur der ersten Heißwalze zur Kompaktierung bzw. Vorverfestigung der ersten unteren Spinnvlieslage höher ist als die Temperatur der zweiten Heißwalze zur Kompaktierung bzw. Vorverfestigung der zweiten oberen Spinnvlieslage.

Erfindungsgemäß ist zusätzlich zu dem vorstehend erläuterten Temperaturunterschied auch der Anpressdruck der ersten Heißwalze zur Kompaktierung bzw. Vorverfestigung der ersten unteren Spinnvlieslage höher als der Anpressdruck der zweiten Heißwalze zur Kompaktierung bzw. Vorverfestigung der zweiten oberen Spinnvlieslage. - Eine Ausführungsform des erfindungsgemäßen Verfahrens ist dadurch gekennzeichnet, dass die Temperatur der ersten Heißwalze zur Kompaktierung bzw. Vorverfestigung der ersten unteren Spinnvlieslage 100 bis 130 °C beträgt und dass die Temperatur der zweiten Heißwalze zur Kompaktierung bzw. Vorverfestigung der zweiten oberen Spinnvlieslage 70 bis 100 °C beträgt. Es liegt dabei im Rahmen der Erfindung, dass die Temperaturen mit erhöhter Anlagengeschwindigkeit ansteigen.

Fernerhin liegt es im Rahmen der Erfindung, dass das Aggregat aus der ersten unteren Spinnvlieslage und der zweiten oberen Spinnvlieslage bzw. das Lagenaggregat für das Laminat endverfestigt wird, vorzugsweise mittels zumindest eines Kalanders endverfestigt wird. Grundsätzlich kann auch eine Heißluft-Endverfestigung des Laminates erfolgen. Nach einer Ausführungsvariante des erfindungsgemäßen Verfahrens ist ein niedrig schmelzender thermoplastischer Kunststoff - insbesondere niedrig schmelzendes Polyethylen - als Komponente in beiden Spinnvlieslagen vorhanden. Auf diese Weise lässt sich eine sehr effektive Endverfestigung des Laminates erzielen.

Es empfiehlt sich, dass das erfindungsgemäße Verfahren bzw. die Kompaktierung(en) und/oder die Vorverfestigung(en) und/oder Verfestigung(en) im Rahmen des erfindungsgemäßen Verfahrens mit der Maßgabe durchgeführt wird/werden, dass die Dicke d₁ der ersten unteren Spinnvlieslage im Laminat 0,1 bis 0,3 mm und sehr bevorzugt 0,15 bis 0,2 mm beträgt und/oder das die Dicke d₂ der zweiten oberen Spinnvlieslage im Laminat 0,2 bis 0,95 mm beträgt. - Die einzelnen Dicken d₁ und d₂ der Spinnvlieslagen im Laminat werden dabei nach bevorzugter Ausführungsform wie nachfolgend beschrieben gemessen. Zunächst wird wie weiter oben erläutert die Gesamtdicke des Laminates nach DIN EN ISO 9073-2 (Februar 1997) gemessen. Anschließend wird das Laminat mittels zustellbaren Flächen auf die so gemessene Gesamtdicke des Laminates komprimiert. Das auf diese Weise erzeugte Vliesvolumen wird zweckmäßiger Weise mittels eines vorzugsweise transparenten Gießharzes aufgefüllt und man lässt das Harz dann aushärten. An dem auf diese Weise stabilisierten Laminat können dann die Dicken der einzelnen Lagen gemessen werden. Dazu können beispielsweise nach einem Schnitt quer zur Oberfläche des Laminates die einzelnen Dicken der Lagen optisch vermessen werden. Es kann auch in der Aufsicht des Laminates insbesondere mittels Raster-Mikroskopie eine Erfassung der einzelnen Grenzflächen und ihrer Höhen-Positionen im Laminat erfolgen.

Es ist erfindungsgemäß, dass die Spinnvlieslagen des erfindungsgemäßen Laminates mit der Maßgabe erzeugt bzw. abgelegt werden, dass die Endlosfilamente der ersten unteren Spinnvlieslage stärker in Maschinenrichtung (MD) orientiert sind als die Endlosfilamente der zweiten oberen Spinnvlieslage. Insoweit weist die erste untere Spinnvlieslage in Maschinenrichtung eine höhere Steifigkeit auf als die zweite obere Spinnvlieslage des Laminates. Bei der ersten unteren Spinnvlieslage handelt es sich im Vergleich zur zweiten oberen Spinnvlieslage um eine kompaktere, steifere und dichtere Spinnvlieslage. Die erste untere Spinnvlieslage bestimmt zweckmäßigerweise die Stabilität des Gesamtproduktes.

Eine sehr empfohlene Ausführungsform des erfindungsgemäßen Verfahrens ist dadurch gekennzeichnet, dass die Längssteifigkeit s_{L} des fertigen Laminates aus der zumindest einen ersten Spinnvlieslage und aus der zumindest einen zweiten Spinnvlieslage 20 bis 80 %, bevorzugt 40 bis 65 % der Längssteifigkeit s_{V} eines Vergleichsvlieses bzw. Vergleichslaminates beträgt. Dabei besteht das Vergleichsvlies bzw. das Vergleichslaminat aus dem gleichen Material wie die zumindest eine erste Spinnvlieslage des Laminates und das Vergleichsvlies bzw. das Vergleichslaminat hat das gleiche Flächengewicht wie das Laminat. Weiterhin wurde das Vergleichsvlies bzw. Vergleichslaminat mit der gleichen Vorrichtung hergestellt wie das Laminat sowie unter gleichen Bedingungen wie das Laminat. Es liegt dabei im Rahmen der Erfindung, dass das Vergleichsvlies bzw. das Vergleichslaminat die gleiche Anzahl von Lagen bzw. Spinnvlieslagen aufweist wie das Laminat und dass alle Lagen bzw. Spinnvlieslagen des Vergleichsvlieses bzw. Vergleichslaminates unter den gleich Bedingungen hergestellt werden wie die erste Spinnvlieslage des Laminates. Insbesondere erfolgt die Vorverfestigung bzw. Verfestigung in der gleichen Weise wie die Vorverfestigung bzw. Verfestigung der ersten Spinnvlieslage des Laminates. So erfolgt beispielsweise bei einer Vorverfestigung der ersten Spinnvlieslage des Laminates mittels eines Kalanders mit 5 bis 22 % Schweißfläche auch eine Vorverfestigung bzw. Verfestigung des Vergleichsvlieses / Vergleichslaminates mittels dieses Kalanders mit 5 bis 22 % Schweißfläche.

Die Längssteifigkeit s_{L} des (fertigen) Laminates und die Längssteifigkeit s_{V} des Vergleichsvlieses bzw. Vergleichslaminates werden im Rahmen der Erfindung insbesondere als die Kraft bei 5 % Dehnung des Laminates bzw. des Vergleichsvlieses/Vergleichslaminates aus der Spannung-Dehnungskurve ermittelt, wobei die Längssteifigkeit vorzugsweise auf das Flächengewicht des Laminates oder des Vergleichsvlieses/Vergleichslaminates normiert wird, so dass die Einheit der Längssteifigkeit (N/5 cm)/(g/m²) ist. - Es liegt im Rahmen der Erfindung, dass die Messung der Längssteifigkeit bzw. der Spannungs-Dehnungskurve nach EDANA 20.2-89 erfolgt. Weiterhin liegt es im Rahmen der Erfindung, dass dabei eine Vliesprobe bzw. Laminatprobe mit einer Breite von 50 mm zwischen zwei Klemmeinrichtungen mit einem Abstand von 100 mm eingespannt wird, so dass die untersuchte/gemessene Länge der Probe 100 mm beträgt. Anschließend wird diese Vliesprobe bzw. Laminatprobe mittels einer Zugmaschine bei einem Vorschub von 100 mm/min bis zu einer Vorkraft von 0,5 N gespannt. In diesem Zustand erfolgt dann das Zurücksetzen der Messung auf Null und die eigentliche Messung beginnt. Die Zugmaschine arbeitet dabei mit einem Vorschub bzw. mit einer Zuggeschwindigkeit von 200 mm/min. Wie oben bereits dargelegt wird also die Längssteifigkeit als Kraft bei 5 % Dehnung der Probe aus der Spannungs-Dehnungskurve ermittelt.

Nach einer Ausführungsform des erfindungsgemäßen Verfahrens kann die Herstellung der zumindest zwei Spinnvlieslagen im inline-Verfahren erfolgen. Gemäß einer anderen Ausführungsvariante ist auch eine offline-Herstellung der Spinnvlieslagen möglich. So kann beispielsweise zunächst nur die zumindest eine erste untere Spinnvlieslage hergestellt werden und zu einem anderen Zeitpunkt und/oder zu einem anderen Ort wird dann die zumindest eine obere Spinnvlieslage auf der zumindest einen ersten unteren Spinnvlieslage abgelegt. Das Laminat aus den zumindest zwei Spinnvlieslagen wird anschließend verfestigt. Von daher liegen im Rahmen des erfindungsgemäßen Verfahrens sowohl eine inline-Herstellung als auch eine offline-Herstellung des Laminates.

Zur Lösung des technischen Problems lehrt die Erfindung weiterhin ein Laminat gemäß Patentanspruch 10.

Es liegt im Rahmen der Erfindung, dass die Kräuselung der Spinnvlieslagen im Laminat von unten nach oben zunimmt. Insoweit liegt es auch im Rahmen der Erfindung, dass die Kräuselung der Spinnvlieslagen im Laminat von unten nach oben von nicht latent kräuselnd bis latent kräuselnd zunimmt. Fernerhin liegt es im Rahmen der Erfindung, dass die Dichte der Spinnvlieslagen im Laminat von unten nach oben abnimmt. Gemäß einer Ausführungsvariante der Erfindung nimmt die Dicke der Spinnvlieslagen im Laminat von unten nach oben zu. Grundsätzlich können die Dicken aber auch identisch bzw. ähnlich sein oder die Dicke der Spinnvlieslagen kann im Laminat auch von unten nach oben abnehmen. Nach sehr empfohlener Ausführungsform nimmt jedenfalls die Dichte der Spinnvlieslagen im Laminat von unten nach oben ab.

Erfindungsgemäß beträgt das Dickenverhältnis der Dicke d₁ der ersten unteren Spinnvlieslage zur Dicke d₂ der zweiten oberen Spinnvlieslage 1:2 bis 1:4. Somit ist nach einer Ausführungsform der Erfindung die Dicke d₂ der zumindest einen zweiten oberen Spinnvlieslage zwei- bis viermal so groß wie die Dicke d₁ der zumindest einen ersten unteren Spinnvlieslage.

Erfindungsgemäß weisen die Endlosfilamente der ersten unteren Spinnvlieslage einen Titer von 1,0 bis 2,5 den, bevorzugt von 1,2 bis 2 den auf. Erfindungsgemäß weisen die Endlosfilamente der zweiten oberen Spinnvlieslage einen Titer von 1,8 bis 2,5 den auf. Eine besonders empfohlene Ausführungsform ist dadurch gekennzeichnet, dass der Titer der zweiten oberen Spinnvlieslage kleiner ist als 2,2 den. Weiter erfindungsgemäß ist, dass der Filamentdurchmesser der Endlosfilamente der zumindest einen ersten unteren Spinnvlieslage geringer ist als der Filamentdurchmesser der Endlosfilamente der zumindest einen zweiten oberen Spinnvlieslage. Von daher nimmt der Titer der Spinnvlieslagen im Laminat von unten nach oben hin zu.

Der Erfindung liegt die Erkenntnis zugrunde, dass mit dem erfindungsgemäßen Verfahren auf einfache Weise ein Laminat herstellbar ist, das sich zum einen durch hohe Stabilität bzw. Dimensionsstabilität - insbesondere in Maschinenrichtung - auszeichnet und zum anderen durch verhältnismäßig hohe Weichheit bzw. Voluminösität. Insoweit wird ein optimaler Kompromiss zwischen Stabilität/Festigkeit zum einen und Weichheit/Voluminösität zum anderen erzielt. Der Erfindung liegt fernerhin die Erkenntnis zugrunde, dass die zumindest eine erste untere Spinnvlieslage die Steifigkeit - insbesondere in Maschinenrichtung des Laminates - in ausreichendem Maße sicherstellt. Das erfindungsgemäße Laminat ist ausreichend kompakt, weist einen guten Griff auf und zeichnet sich auch durch eine verhältnismäßig niedrige Gesamtdichte auf. Hervorzuheben ist weiterhin, dass das erfindungsgemäße Laminat durch relativ einfache und wenig aufwendige Weise herstellbar ist und sich insoweit auch durch verhältnismäßig geringe Kosten auszeichnet. Das erfindungsgemäße Laminat kann vor allem für Hygieneanwendungen, beispielsweise für Windeln und dergleichen eingesetzt werden. Grundsätzlich sind aber auch andere Anwendungsmöglichkeiten denkbar.

Nachfolgend wird die Erfindung anhand eines Ausführungsbeispiels näher erläutert. Es wird ein erfindungsgemäßes Laminat aus zwei Spinnvlieslagen aus Polypropylenen mittels einer Doppelbalkenanlage hergestellt. Beide Spinnvlieslagen werden nach dem Spunbond-Verfahren erzeugt. Zweckmäßigerweise werden die beiden Spinnvlieslagen jeweils nach der Reicofil-Methode hergestellt. Dabei werden die für eine Spinnvlieslage ersponnenen Filamente zunächst durch eine Kühlkammer geführt und dort mit Kühlluft gekühlt und im Anschluss daran in eine Verstreckeinheit zur aerodynamischen Verstreckung eingeführt. Zweckmäßigerweise und im Ausführungsbeispiel wird bei der Herstellung jeder Spinnvlieslage mit einer kombinierten Abkühl- und Verstreckeinheit gearbeitet, die als geschlossenes System ausgebildet ist. Das bedeutet, dass in dieser Abkühl- und Verstreckeinheit, abgesehen von der Luftzufuhr in der Kühlkammer, keine weitere Luftzufuhr von außen erfolgt. Nach dem Durchlaufen der Verstreckeinheit werden die Filamente jeder Lage durch einen Diffusor geführt und im Anschluss daran auf einem Ablagesiebband zur Spinnvlieslage abgelegt.

Zur Erzeugung der ersten unteren Spinnvlieslage werden - nicht erfindungsgemäßerweise - Monokomponentenfilamente aus Polypropylen ersponnen. Dabei handelt es sich um Homo-Polypropylen (Borealis HG455FB) mit einer Schmelzflussrate von 25 g/10 min (gemessen nach ISO 1133, 230 °C/2.16 kp). Die ersponnenen Filamente weisen einen Titer von 1,8 Denier auf und die auf dem Ablagesiebband abgelegte erste Spinnvlieslage wird mit einer Heißwalze als Vorverfestigungswalze bei einer Walzentemperatur von 120 °C kompaktiert bzw. vorverfestigt.

Die zweite obere Spinnvlieslage für das Laminat wird im Gegensatz zur ersten Spinnvlieslage aus kräuselnden bzw. selbstkräuselnden Filamenten erzeugt. Die Filamente für diese zweite obere Spinnvlieslage werden als Bikomponentenfilamente mit Seite-Seite-Konfiguration ersponnen. Dabei besteht die erste Seite im Ausführungsbeispiel aus dem Homo-Polypropylen der ersten Spinnvlieslage (Daten siehe oben). Die zweite Seite der Bikomponentenfilamente besteht aus einer Mischung aus zwei Polypropylenen, die im Massenverhältnis 50:50 gemischt werden. Bei dem ersten Polypropylen für diese Mischung handelt es sich wieder um das Homo-Polypropylen der ersten Spinnvlieslage (Daten siehe oben) und bei dem zweiten Polypropylen für die zweite Seite der Bikomponentenfilamente handelt es sich um Homo-Polypropylen mit breiterer Molekülmassenverteilung (Moplen HP552R), wobei dieses Polypropylen ebenfalls eine Schmelzflussrate von 25 g/10 min (gemessen nach ISO 1133, 230 °C/2.16 kp) aufweist. Das Massenverhältnis der ersten Seite (Homo-Polypropylen der ersten Spinnvlieslage) zur zweiten Seite (Mischung der oben genannten Polypropylene) der Bikomponentenfilamente beträgt im Ausführungsbeispiel 80:20. Für die zweite obere Spinnvlieslage werden Bikomponentenfilamente ersponnen, die einen Titer von 1,9 Denier aufweisen. Die Bikomponentenfilamente werden als zweite obere Spinnvlieslage auf der auf dem Ablagesiebband aufliegenden ersten unteren Spinnvlieslage abgelegt. Anschließend erfolgt eine Kompaktierung bzw. Vorverfestigung mit einer Heißwalze bzw. Vorverfestigungswalze mit einer Walzentemperatur von 90 °C.

Schließlich wird das Laminat aus den beiden Spinnvlieslagen mit einem beheizten Kalander verfestigt. Der Kalander weist eine Gravurfläche von 18 % auf und eine Gravur von 50 elliptischen Punkten/cm². Die Kalandertemperatur (Oberfläche) beträgt 138 °C und der Andruck (Linienlast) 45 N/mm. Es wird im Übrigen bei einer Anlagengeschwindigkeit von 235 m/min gearbeitet. - Das Flächengewicht des fertigen Laminates beträgt 22 g/m² und der Massenanteil der ersten Spinnvlieslage in dem fertigen Laminat beträgt 52 % (erste Spinnvlieslage: 11,5 g/m²; zweite Spinnvlieslage: 10,5 g/m²). Das fertige Laminat weist eine Dicke von 0,38 mm auf. Für die Längssteifigkeit s_{L} des fertigen Laminates ergibt sich für 5 % Dehnung des Laminates eine Zugkraft von 6,8 N/5 cm.

Ein Vergleichsvlies bzw. ein Vergleichslaminat wird aus zwei Spinnvlieslagen erzeugt, die beide aus dem Homo-Polypropylen der ersten Spinnvlieslage des oben beschriebenen Laminates bestehen. Dieses Vergleichslaminat wird unter den gleichen Bedingungen hergestellt wie das oben beschriebene erfindungsgemäße Laminat (gleiche Anlagengeschwindigkeit, Kalandertemperatur, Titer, jeweilige Flächengewichte jeder Lage etc.). Das Vergleichslaminat weist eine Dicke von 0,27 mm auf und bei 5 % Dehnung des Vergleichslaminates wird eine Zugkraft von 10,8 N/5 cm gemessen. - Das Verhältnis der Zugkräfte bei dem erfindungsgemäßen Laminat einerseits und bei dem Vergleichslaminat andererseits beträgt bei 5 % Dehnung 0,63.

Nicht erfindungsgemäßerweise werden für die zumindest eine erste untere Spinnvlieslage Monokomponenten aus einem Polymer bzw. aus einem Polypropylen mit relativ enger Molmassenverteilung eingesetzt. Vorzugsweise beträgt die Schmelzflussrate dieses Polymers bzw. dieses Polypropylens 19 bis 40 g/10 min. Die hier angegebenen Schmelzflussraten werden im Übrigen alle nach ISO 1133, 230°C/2,16 kp gemessen.

Es liegt im Rahmen der Erfindung, dass für die zumindest eine zweite obere Spinnvlieslage Bikomponentenfilamente mit Seite-Seite-Konfiguration eingesetzt werden. Für die eine Seite dieser Bikomponentenfilamente wird zweckmäßigerweise ein Polymer bzw. ein Polypropylen entsprechend der vorstehend erläuterten Monokomponentenfilamente der ersten unteren Spinnvlieslage verwendet. Für die zweite Seite der Bikomponentenfilamente kommt bevorzugt ein Polymer bzw. Polypropylen mit breiterer Molmassenverteilung zum Einsatz. Nach einer empfohlenen Ausführungsform weist das Polymer bzw. weist das Polypropylen der zweiten Seite eine Schmelzflussrate zwischen 15 und 40 g/10 min auf. Gemäß einer Ausführungsvariante werden für die zweite Seite Mischungen von Polymeren bzw. von Polypropylenen bzw. von zwei Polypropylenen eingesetzt. Die bevorzugt hierzu verwendeten Polypropylene können monomodale oder bimodale Polypropylene oder Copolymere dieser Polypropylene sein. Das Mischungsverhältnis beträgt beispielsweise 50:50. Die Komponenten der Polymermischungen bzw. Polypropylenmischungen für die zweite Seite der Bikomponentenfilamente weisen zweckmäßigerweise Schmelzflussraten zwischen 3 und 60 g/10 min auf. - Das Massenverhältnis der beiden Seiten der Bikomponentenfilamente beträgt vorzugsweise 60:40 bis 90:10, bevorzugt 65:35 bis 80:20. Das Verhältnis der Schmelzflussraten der Polymere bzw. der Polypropylene beider Seiten der Bikomponentenfilamente beträgt empfohlenermaßen 0,65 bis 1,5.

Nachfolgend wird die Erfindung anhand einer lediglich ein Ausführungsbeispiel darstellenden Zeichnung näher erläutert. Es zeigen in schematischer Darstellung:
- Fig. 1: eine nicht erfindungsgemäße Ausführungsform einer Vorrichtung zur Durchführung Verfahrens zur Herstellung eines Laminates in der Seitenansicht und
- Fig. 2: eine erfindungsgemäße Ausführungsform einer Vorrichtung zur Durchführung des erfindungsgemäßen Verfahrens zur Herstellung eines erfindungsgemäßen Laminates in der Seitenansicht.

Mit der dargestellten Vorrichtung bzw. mit dem erfindungsgemäßen Verfahren ist ein Laminat 1 mit zumindest zwei Spinnvlieslagen 2, 3 aus Endlosfilamenten herstellbar. Vorzugsweise und im Ausführungsbeispiel besteht das Laminat lediglich aus zwei Spinnvlieslagen 2 und 3. Die Endlosfilamente bestehen zweckmäßigerweise und im Ausführungsbeispiel aus thermoplastischem Kunststoff.

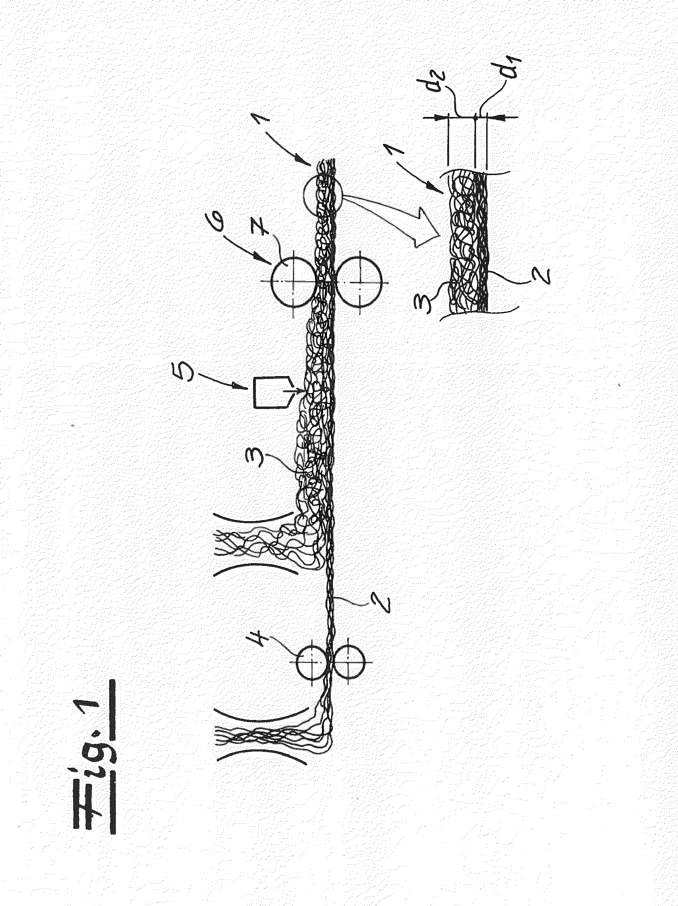

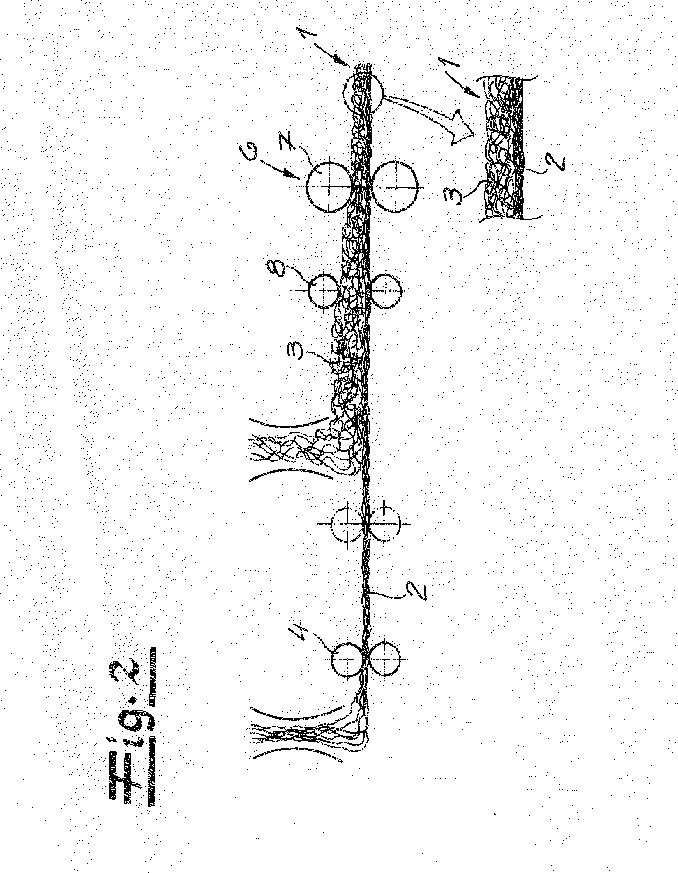

Vorzugsweise und im Ausführungsbeispiel nach den Figuren 1 und 2 werden nicht-kräuselnde Endlosfilamente bzw. wenig kräuselnde Endlosfilamente zu der ersten Spinnvlieslage 2 abgelegt. Diese Endlosfilamente haben erfindungsgemäß eine zentrische bzw. symmetrische Konfiguration und vorzugsweise eine Kern-Mantel-Konfiguration bzw. -querschnittskonfiguration. Der Kern besteht zweckmäßigerweise und im Ausführungsbeispiel aus Polypropylen und der Mantel aus Polyethylen, wobei das Gewichtsverhältnis Polypropylen zu Polyethylen bevorzugt und im Ausführungsbeispiel 70:30 beträgt. Der höhere Propylenanteil im Kern trägt hier zur Stabilität bzw. Festigkeit der ersten Spinnvlieslage 2 bei. Empfohlenermaßen und bei der Ausführungsform nach den Figuren 1 und 2 wird die erste untere Spinnvlieslage 2 dann mit Hilfe einer Heißwalze 4 kompaktiert bzw. vorverfestigt. Diese erste Heißwalze 4 mag im Ausführungsbeispiel eine Temperatur von 120° C aufweisen.

Nach dieser Kompaktierung bzw. Vorverfestigung werden kräuselnde Endlosfilamente bzw. im Vergleich zu den Endlosfilamenten der ersten unteren Spinnvlieslage 2 stärker kräuselnde Endlosfilamente über der ersten Spinnvlieslage 2 zu der zweiten oberen Spinnvlieslage 3 abgelegt. Bei diesen Endlosfilamenten für die zweite obere Spinnvlieslage 3 handelt es sich zweckmäßigerweise um Filamente mit natürlicher bzw. latenter Kräuselung. Dazu werden im Ausführungsbeispiel Endlosfilamente in Form von Bikomponentenfilamente mit Seite-Seite-Konfiguration eingesetzt.

Im Ausführungsbeispiel nach Fig. 1 besteht empfohlenermaßen die eine Komponente (erste Seite) aus Polypropylen und die zweite Komponente (zweite Seite) aus Polyethylen, wobei das Gewichtsverhältnis von Polypropylen zu Polyethylen zweckmäßigerweise 40:60 bis 60:40 beträgt. Im Ausführungsbeispiel gemäß der Fig. 1 wird nach der Ablage der zweiten Spinnvlieslage 3 auf der ersten Spinnvlieslage 2 die zweite obere Spinnvlieslage 3 mit Hilfe eines Heißluftmessers 5 kompaktiert bzw. vorverfestigt. Im Anschluss daran wird vorzugsweise und im Ausführungsbeispiel das Aggregat aus der ersten unteren Spinnvlieslage 2 und der zweiten oberen Spinnvlieslage 3 mit Hilfe eines Kalanders 6 endverfestigt. Dabei ist die obere Kalanderwalze 7 bevorzugt und im Ausführungsbeispiel beheizt.

Im Ausführungsbeispiel gemäß Fig. 2 werden für die zweite obere Spinnvlieslage 3 ebenfalls Bikomponentenfilamente mit Seite-Seite-Konfiguration verwendet. Hier besteht die eine Komponente (erste Seite) aus einem ersten Polypropylen und die zweite Komponente (zweite Seite) aus einem zweiten davon verschiedenen bzw. unterschiedlichen Polypropylen. Zweckmäßigerweise und im Ausführungsbeispiel wird nach der Ablage dieser zweiten Spinnvlieslage 3 auf der ersten Spinnvlieslage 2 die zweite obere Spinnvlieslage 3 mit Hilfe einer zweiten Heißwalze 8 kompaktiert bzw. vorverfestigt. Erfindungsgemäß ist die Temperatur der ersten Heißwalze 4 zur Kompaktierung bzw. Vorverfestigung der ersten Spinnvlieslage 2 höher als die Temperatur der zweiten Heißwalze 8 zur Kompaktierung bzw. Vorverfestigung der zweiten Spinnvlieslage 3. Im Übrigen ist empfohlenermaßen und im Ausführungsbeispiel auch der Anpressdruck der ersten Heißwalze 4 höher als der Anpressdruck der zweiten Heißwalze 8. Im Ausführungsbeispiel nach Fig. 2 wird im Anschluss an die Kompaktierung bzw. Vorverfestigung mit der zweiten Heißwalze 8 das Aggregat aus der ersten unteren Spinnvlieslage 2 und der zweiten oberen Spinnvlieslage 3 wiederum mit Hilfe eines Kalanders 6 endverfestigt. Zweckmäßigerweise ist die obere Kalanderwalze 7 des Kalanders 6 beheizt ausgeführt.

Erfindungsgemäß ist im Übrigen der Titer der Endlosfilamente der ersten unteren Spinnvlieslage 2 geringer als der Titer der Endlosfilamente der zweiten oberen Spinnvlieslage 3. Es ist erfindungsgemäß, dass die Spinnvlieslagen 2, 3 mit der Maßgabe erzeugt bzw. abgelegt werden, dass die Endlosfilamente der ersten unteren Spinnvlieslage 2 stärker in Maschinenrichtung (MD) orientiert sind als die Endlosfilamente der zweiten oberen Spinnvlieslage 3. Die untere kompaktere Spinnvlieslage 2 ist bevorzugt und im Ausführungsbeispiel in Maschinenrichtung steifer bzw. zugfester als die zweite obere Spinnvlieslage 3. Die erste untere Spinnvlieslage 2 bestimmt zweckmäßigerweise und im Ausführungsbeispiel die Festigkeit bzw. Zugfestigkeit und Steifigkeit des gesamten Laminates 1. Dagegen stellt die zweite obere Spinnvlieslage 3 gleichsam die Weichheit und Voluminösität des Laminates 1 sicher.

## Patentansprüche

1. Verfahren zur Herstellung eines Laminates (1) mit zumindest zwei Spinnvlieslagen (2, 3) aus Endlosfilamenten,
wobei nicht-kräuselnde Endlosfilamente und/oder wenig kräuselnde Endlosfilamente zu zumindest einer ersten Spinnvlieslage (2) abgelegt werden, wobei als Endlosfilamente für die erste Spinnvlieslage (2) Mehrkomponentenfilamente bzw. Bikomponentenfilamente mit symmetrischer bzw. zentrischer Konfiguration eingesetzt werden, wobei die zumindest eine erste Spinnvlieslage (2) mittels zumindest einer Heißwalze (4) kompaktiert bzw. vorverfestigt wird,
wobei im Anschluss daran kräuselnde Endlosfilamente bzw. im Vergleich zu den Endlosfilamenten der ersten Spinnvlieslage (2) stärker kräuselnde Endlosfilamente über der ersten Spinnvlieslage (2) zu zumindest einer zweiten Spinnvlieslage (3) abgelegt werden, **dadurch gekennzeichnet,**
**dass** die zweite Spinnvlieslage (3) mittels zumindest einer Heißwalze (5) kompaktiert bzw. vorverfestigt wird, wobei die Temperatur der ersten Heißwalze (4) zur Kompaktierung bzw. zur Vorverfestigung der ersten Spinnvlieslage (2) höher ist als die Temperatur der zweiten Heißwalze (8) zur Kompaktierung bzw. Vorverfestigung der zweiten Spinnvlieslage,
wobei der Anpressdruck der ersten Heißwalze (4) zur Kompaktierung bzw. zur Vorverfestigung der ersten Spinnvlieslage (2) höher ist als der Anpressdruck der zweiten Heißwalze (8) zur Kompaktierung bzw. Vorverfestigung der zweiten Spinnvlieslage (3),
wobei das Aggregat aus den zumindest zwei Spinnvlieslagen (2, 3) daraufhin verfestigt wird, so dass die Gesamtdicke d des Laminates mindestens 0,15 mm und weniger als 1,5 mm, bevorzugt weniger als 1 mm beträgt,
**dass** die Spinnvlieslagen (2, 3) mit der Maßgabe erzeugt bzw. abgelegt werden, dass die Endlosfilamente der ersten Spinnvlieslage (2) stärker in Maschinenrichtung (MD) orientiert sind als die Endlosfilamente der zweiten Spinnvlieslage (3),
**dass** die Endlosfilamente der ersten Spinnvlieslage (2) einen Titer von 1,0 bis 2,5 den aufweisen und dass die Endlosfilamente der zweiten Spinnvlieslage (3) einen Titer von 1,8 bis 2,5 den aufweisen
und **dass** der Filamentdurchmesser der Endlosfilamente der ersten Spinnvlieslage (2) geringer ist als der Filamentdurchmesser der Endlosfilamente der zweiten Spinnvlieslage (3).

2. Verfahren nach Anspruch 1, **dadurch gekennzeichnet, dass** als Endlosfilamente für die erste Spinnvlieslage (2) Mehrkomponentenfilamente bzw. Bikomponentenfilamente mit zentrischer Kern-Mantel-Konfiguration eingesetzt werden.

3. Verfahren nach einem der Ansprüche 1 oder 2, **dadurch gekennzeichnet, dass** die Endlosfilamente der ersten Spinnvlieslage (2) aus zumindest einem Polyolefin bzw. im Wesentlichen aus zumindest einem Polyolefin bestehen, insbesondere aus Polypropylen und/oder Polyethylen bestehen bzw. im Wesentlichen bestehen.

4. Verfahren nach einem der Ansprüche 1 bis 3, **dadurch gekennzeichnet, dass** als Endlosfilamente für die zweite Spinnvlieslage (3) Filamente mit natürlicher Kräuselung bzw. mit latenter Kräuselung eingesetzt werden.

5. Verfahren nach einem der Ansprüche 1 bis 4, **dadurch gekennzeichnet, dass** als Endlosfilamente für die zweite Spinnvlieslage (3) Mehrkomponentenfilamente bzw. Bikomponentenfilamente mit Seite-Seite-Konfiguration und/oder Mehrkomponentenfilamente bzw. Bikomponentenfilamente mit azentrischer bzw. unsymmetrischer Querschnittskonfiguration eingesetzt werden, insbesondere mit azentrischer Kern-Mantel-Konfiguration.

6. Verfahren nach Anspruch 5, **dadurch gekennzeichnet, dass** zumindest eine Komponente der Mehrkomponentenfilamente bzw. Bikomponentenfilamente aus zumindest einem Polyolefin bzw. im Wesentlichen aus zumindest einem Polyolefin besteht.

7. Verfahren nach einem der Ansprüche 1 bis 6, **dadurch gekennzeichnet, dass** das Aggregat aus der ersten Spinnvlieslage (2) und der zweiten Spinnvlieslage (3) bzw. das Lagenaggregat für das Laminat (1) endverfestigt wird, vorzugsweise mittels zumindest einem Kalander (6) und/oder mit zumindest einem Heißluftofen endverfestigt wird.

8. Verfahren nach einem der Ansprüche 1 bis 7, **dadurch gekennzeichnet, dass** das Verfahren bzw. die Kompaktierung(en) und/oder Vorverfestigung(en) und/oder Verfestigung(en) mit der Maßgabe durchgeführt wird/werden, dass die Dicke d₁ der ersten Spinnvlieslage (2) im Laminat (1) 0,05 bis 0,6 mm, bevorzugt 0,1 bis 0,3 mm beträgt und/oder dass die Dicke d₂ der zweiten Spinnvlieslage (3) im Laminat (1) 0,15 bis 2,8 mm, bevorzugt 0,2 bis 2,5 mm und sehr bevorzugt 0,2 bis 0,95 mm beträgt.

9. Verfahren nach einem der Ansprüche 1 bis 8, **dadurch gekennzeichnet, dass** die Längssteifigkeit s_{L} des (fertigen) Laminates aus der zumindest einen ersten Spinnvlieslage (2) und aus der zumindest einen zweiten Spinnvlieslage (3) 20 bis 80%, bevorzugt 40 bis 65 % der Längssteifigkeit sv eines Vergleichsvlieses bzw. Vergleichslaminates aus dem Material der zumindest einen ersten Spinnvlieslage beträgt, welches Vergleichsvlies bzw. Vergleichslaminat das gleiche Flächengewicht wie das Laminat aufweist und unter den gleichen Bedingungen wie die erste Spinnvlieslage behandelt und/oder vorverfestigt und/oder verfestigt wurde.

10. Laminat mit zumindest zwei Spinnvlieslagen (2, 3) aus Endlosfilamenten, wobei zumindest eine erste Spinnvlieslage (2) aus nicht-kräuselnden Endlosfilamenten und/oder aus wenig kräuselnden Endlosfilamenten besteht bzw. im Wesentlichen besteht, wobei die Endlosfilamente für die erste Spinnvlieslage (2) Mehrkomponentenfilamente bzw. Bikomponentenfilamente mit symmetrischer bzw. zentrischer Konfiguration sind, wobei zumindest eine zweite Spinnvlieslage (3) aus kräuselnden bzw. aus im Vergleich zu den Endlosfilamenten der ersten Spinnvlieslage (2) stärker kräuselnden Endlosfilamenten besteht bzw. im Wesentlichen besteht, **dadurch gekennzeichnet,**
**dass** die Gesamtdicke d des Laminates mindestens 0,15 mm und weniger als 1,5 mm, bevorzugt weniger als 1 mm beträgt, und wobei das Flächengewicht des Laminates (1) 8 bis 80 g/m², vorzugsweise 10 bis 40 g/m², bevorzugt 12 bis 30 g/m² und sehr bevorzugt 20 bis 25 g/m² beträgt und
**dass** das Dickenverhältnis der Dicke d₁ der ersten Spinnvlieslage (2) zur Dicke d₂ der zweiten Spinnvlieslage (3) 1:2 bis 1:4 beträgt,
**dass** die Endlosfilamente der ersten Spinnvlieslage (2) stärker in Maschinenrichtung (MD) orientiert sind als die Endlosfilamente der zweiten Spinnvlieslage (3),
**dass** die Endlosfilamente der ersten Spinnvlieslage (2) einen Titer von 1,0 bis 2,5 den aufweisen und dass die Endlosfilamente der zweiten Spinnvlieslage (3) einen Titer von 1,8 bis 2,5 den aufweisen
und **dass** der Filamentdurchmesser der Endlosfilamente der ersten Spinnvlieslage (2) geringer ist als der Filamentdurchmesser der Endlosfilamente der zweiten Spinnvlieslage (3).

11. Laminat nach Anspruch 10, **dadurch gekennzeichnet, dass** die Masse der zumindest einen ersten Spinnvlieslage (2) 30 bis 70 % der Gesamtmasse des Laminates beträgt.

12. Laminat nach Anspruch 10 oder 11, **dadurch gekennzeichnet, dass** die Endlosfilamente der ersten Spinnvlieslage (2) einem Titer von 1,2 bis 2 den aufweisen.

## Claims

1. Method for producing a laminate (1) comprising at least two spunbond layers (2, 3) of continuous filaments,
wherein non-crimping continuous filaments and/or low crimping continuous filaments are deposited to form at least one first spunbond layer (2), wherein multicomponent filaments or bicomponent filaments having a symmetrical or centric configuration are used as continuous filaments for the first spunbond layer (2), wherein the at least one first spunbond layer (2) is compacted or pre-consolidated by means of at least one hot roller (4),
wherein crimping continuous filaments or more strongly crimping continuous filaments compared to the continuous filaments of the first spunbond layer (2) are then deposited over the first spunbond layer (2) to form at least a second spunbond layer (3), **characterized in**
**that** the second spunbond layer (3) is compacted or pre-consolidated by means of at least one hot roller (5), wherein the temperature of the first hot roller (4) for compacting or for pre-consolidating the first spunbond layer (2) is higher than the temperature of the second hot roller (8) for compacting or pre-consolidating the second spunbond layer,
wherein the contact pressure of the first hot roller (4) for compacting or for pre-consolidating the first spunbond layer (2) is higher than the contact pressure of the second hot roller (8) for compacting or pre-consolidating the second spunbond layer (3),
wherein the unit comprising the at least two spunbond layers (2, 3) is then consolidated so that the total thickness d of the laminate is at least 0.15 mm and less than 1.5 mm, preferably less than 1 mm,
**that** the spunbond layers (2, 3) are produced or deposited with the provision that the continuous filaments of the first spunbond layer (2) are more strongly oriented in the machine direction (MD) than the continuous filaments of the second spunbond layer (3),
**that** the continuous filaments of the first spunbond layer (2) have a titre of 1.0 to 2.5 den and that the continuous filaments of the second spunbond layer (3) have a titre of 1.8 to 2.5 den
and **that** the filament diameter of the continuous filaments of the first spunbond layer (2) is less than the filament diameter of the continuous filaments of the second spunbond layer (3).

2. Method according to Claim 1, **characterized in that** multicomponent filaments or bicomponent filaments having a centric core-sheath configuration are used as continuous filaments for the first spunbond layer (2).

3. Method according to one of Claims 1 or 2, **characterized in that** the continuous filaments of the first spunbond layer (2) consist of at least one polyolefin or substantially of at least one polyolefin, in particular consist or substantially consist of polypropylene and/or polyethylene.

4. Method according to one of Claims 1 to 3, **characterized in that** filaments having a natural crimp or having a latent crimp are used as continuous filaments for the second spunbond layer (3).

5. Method according to one of Claims 1 to 4, **characterized in that** multicomponent filaments or bicomponent filaments having a side-side configuration and/or multicomponent filaments or bicomponent filaments having an acentric or asymmetric cross-sectional configuration, in particular having an acentric core-sheath configuration are used as continuous filaments for the second spunbond layer (3) .

6. Method according to Claim 5, **characterized in that** at least one component of the multicomponent filaments or bicomponent filaments consists of at least one polyolefin or substantially of at least one polyolefin.

7. Method according to one of Claims 1 to 6, **characterized in that** the unit comprising the first spunbond layer (2) and the second spunbond layer (3) or the layer unit for the laminate (1) is finally consolidated, preferably finally consolidated by means of at least one calender (6) and/or by means of at least one hot air oven.

8. Method according to one of Claims 1 to 7, **characterized in that** the method or the compaction(s) and/or pre-consolidation(s) and/or consolidation(s) is/are carried out with the provision that the thickness d₁ of the first spunbond layer (2) in the laminate (1) is 0.05 to 0.6 mm, preferably 0.1 to 0.3 mm and/or that the thickness d₂ of the second spunbond layer (3) in the laminate (1) is 0.15 to 2.8 mm, preferably 0.2 to 2.5 mm and very preferably 0.2 to 0.95 mm.

9. Method according to one of Claims 1 to 8, **characterized in that** the longitudinal stiffness s_{L} of the (finished) laminate comprising the at least one first spunbond layer (2) and comprising the at least one second spunbond layer (3) is 20 to 80%, preferably 40 to 65% of the longitudinal stiffness s_{V} of a comparative nonwoven or comparative laminate comprising the material of the at least one first spunbond layer, which comparative nonwoven or comparative laminate has the same grammage as the laminate and has been treated and/or pre-consolidated and/or consolidated under the same conditions as the first spunbond layer.

10. Laminate comprising at least two spunbond layers (2, 3) of continuous filaments, wherein at least a first spunbond layer (2) consists or substantially consists of non-crimping continuous filaments and/or of low-crimping continuous filaments, wherein the continuous filaments for the first spunbond layer (2) are multicomponent filaments or bicomponent filaments having a symmetrical or centric configuration, wherein at least one second spunbond layer (3) consists or substantially consists of crimping or of more strongly crimping continuous filaments compared to the continuous filaments of the first spunbond layer (2), **characterized in**
**that** the total thickness d of the laminate is at least 0.15 mm and less than 1.5 mm, preferably less than 1 mm and wherein the grammage of the laminate (1) is 8 to 80 g/m², preferably 10 to 40 g/m², preferably 12 to 30 g/m² and very preferably 20 to 25 g/m² and
**that** the thickness ratio of the thickness d₁ of the first spunbond layer (2) to the thickness d₂ of the second spunbond layer (3) is 1:2 to 1:4,
**that** the continuous filaments of the first spunbond layer (2) are more strongly oriented in the machine direction (MD) than the continuous filaments of the second spunbond layer (3),
**that** the continuous filaments of the first spunbond layer (2) have a titre of 1.0 to 2.5 den and that the continuous filaments of the second spunbond layer (3) have a titre of 1.8 to 2.5 den
and **that** the filament diameter of the continuous filaments of the first spunbond layer (2) is smaller than the filament diameter of the continuous filaments of the second spunbond layer (3).

11. Laminate according to Claim 10, **characterized in that** the mass of the at least one first spunbond layer (2) is 30 to 70% of the total mass of the laminate.

12. Laminate according to Claim 10 or 11, **characterized in that** the continuous filaments of the first spunbond layer (2) have a titre of 1.2 to 2 den.

## Revendications

1. Procédé destiné à produire un laminé (1) comprenant au moins deux couches de non-tissé (2, 3) filé-lié en filaments continus,
lors duquel, des filaments continus non frisés et / ou des filaments continus peu frisés sont déposés en au moins une première couche de non-tissé (2) filé-lié, en tant que filaments continus pour la première couche de non-tissé (2) filé-lié étant mis en œuvre des filaments multicomposants ou des filaments bicomposants de configuration symétrique ou centrique, l'au moins une première couche de non-tissé (2) filé-lié étant compactée ou préconsolidée au moyen d'au moins un cylindre chauffant (4),
lors duquel par la suite, des filaments continus frisés ou des filaments continus plus fortement frisés en comparaison des filaments continus de la première couche de non-tissé (2) filé-lié sont déposés pardessus la première couche de non-tissé (2) filé-lié, en au moins une deuxième couche de non-tissé (3) filé-lié, **caractérisé**
**en ce que** l'on compacte ou l'on préconsolide la deuxième couche de non-tissé (3) filé-lié au moyen d'au moins un cylindre chauffant (5), la température du premier cylindre chauffant (4) destiné à compacter ou à préconsolider la première couche de non-tissé (2) filé-lié étant supérieure à la température du deuxième cylindre chauffant (8), destiné à compacter ou à préconsolider la deuxième couche de non-tissé filé-lié,
la pression de contact du premier cylindre chauffant (4), destiné à compacter ou à préconsolider la première couche de non-tissé (2) filé-lié étant supérieure à la pression de contact du deuxième cylindre chauffant (8), destiné à compacter ou à préconsolider la deuxième couche de non-tissé (3) filé-lié,
lors duquel, l'agrégat constitué des au moins deux couches de non-tissé (2, 3) filé-lié est consolidé par la suite, de telle sorte que l'épaisseur totale d du laminé s'élève à au moins 0,15 mm et à moins de 1,5 mm, de préférence à moins de 1 mm,
**en ce que** l'on créé ou l'on dépose les couches de non-tissé (2, 3) filé-lié avec la consigne que les filaments continus de la première couche de non-tissé (2) filé-lié soient plus fortement orientés dans la direction de la machine (MD) que les filaments continus de la deuxième couche de non-tissé (3) filé-lié,
**en ce que** les filaments continus de la première couche de non-tissé (2) filé-lié présentent un titre de 1,0 à 2,5 den et en ce que les filaments continus de la deuxième couche de non-tissé (3) filé-lié présentent un titre de 1,8 à 2,5 den,
et **en ce que** le diamètre de filament des filaments continus de la première couche de non-tissé (2) filé-lié est inférieur au diamètre de filament des filaments continus de la deuxième couche de non-tissé (3) filé-lié.

2. Procédé selon la revendication 1, **caractérisé en ce qu'**en tant que filaments continus pour la première couche de non-tissé (2) filé-lié, l'on met en œuvre des filaments multicomposants ou des filaments bicomposants d'une configuration âme-gaine centrique.

3. Procédé selon l'une quelconque des revendications 1 ou 2, **caractérisé en ce que** les filaments continus de la première couche de non-tissé (2) filé-lié sont constitués d'au moins une polyoléfine ou majoritairement d'au moins une polyoléfine, sont constitués notamment ou sont constitués majoritairement d'un polypropylène et/ou d'un polyéthylène.

4. Procédé selon l'une quelconque des revendications 1 à 3, **caractérisé en ce qu'**en tant que filaments continus pour la deuxième couche de non-tissé (3) filé-lié, l'on utilise des filaments à frisure naturelle ou à frisure latente.

5. Procédé selon l'une quelconque des revendications 1 à 4, **caractérisé en ce qu'**en tant que filaments continus pour la deuxième couche de non-tissé (3) filé-lié, l'on met en œuvre des filaments multicomposants ou des filaments bicomposants de configuration côte à côte et / ou des filaments multicomposants ou des filaments bicomposants de configuration à section transversale non centrique ou asymétrique, notamment de configuration âme-gaine non centrique.

6. Procédé selon la revendication 5, **caractérisé en ce qu'**au moins un composant des filaments multicomposants ou des filaments bicomposants est constitué d'au moins une polyoléfine ou majoritairement d'au moins une polyoléfine.

7. Procédé selon l'une quelconque des revendications 1 à 6, **caractérisé en ce que** l'on procède à la consolidation finale de l'agrégat constitué de la première couche de non-tissé (2) filé-lié et de la deuxième couche de non-tissé (3) filé-lié ou de l'agrégat de couches pour le laminé (1), de préférence au moyen d'au moins une calandre (6) et/ou à l'aide d'au moins un four à convection.

8. Procédé selon l'une quelconque des revendications 1 à 7, **caractérisé en ce que** l'on réalise le procédé ou la(les) compactage(s) et/ou la(les) préconsolidation(s) avec la consigne que l'épaisseur d₁ de la première couche de non-tissé (2) filé-lié dans le laminé (1) s'élève à de 0,05 à 0,6 mm, de préférence à de 0,1 à 0,3 mm et /ou que l'épaisseur d₂ de la deuxième couche de non-tissé (3) filé-lié dans le laminé (1) s'élève à de 0,15 à 2,8 mm, de préférence à de 0,2 à 2,5 mm et de manière très préférentielle, à de 0,2 à 0,95 mm.

9. Procédé selon l'une quelconque des revendications 1 à 8, **caractérisé en ce que** la rigidité longitudinale s_{L} du laminé (fini) constitué de l'au moins une première couche de non-tissé (2) filé-lié et de l'au moins une deuxième couche de non-tissé (3) filé-lié s'élève à de 20 à 80%, de préférence à de 40 à 65 % de la rigidité longitudinale s_{V} d'un non-tissé comparatif ou d'un laminé comparatif dans la matière de l'au moins une première couche de non-tissé filé-lié, lequel non-tissé comparatif ou laminé comparatif présente le même grammage que le laminé et a été traité et / ou préconsolidé et/ou consolidé dans les mêmes conditions que la première couche de non-tissé filé-lié.

10. Laminé comprenant au moins deux couches de non-tissé (2, 3) filé-lié en filaments continus, au moins une première couche de non-tissé (2) filé-lié étant constituée ou majoritairement constituée de filaments continus non frisés et / ou de filaments continus peu frisés, les filaments continus pour la première couche de non-tissé (2) filé-lié étant des filaments multicomposants ou des filaments bicomposants de configuration symétrique ou centrique, au moins une deuxième couche de non-tissé (3) filé-lié étant constituée de filaments continus frisés ou plus frisés en comparaison des filaments continus de la première couche de non-tissé (2) filé-lié, **caractérisé**
**en ce que** l'épaisseur totale d du laminé s'élève à au moins 0,15 mm et à moins de 1,5 mm, de préférence à moins de 1 mm, et en ce que le grammage du laminé (1) s'élève à de 8 à 80 g/m², de préférence à de 10 à 40 g/m², de manière préférentielle à de 12 à 30 g/m² et de manière très préférentielle, à de 20 à 25 g/m² et
**en ce que** le rapport d'épaisseur de l'épaisseur d₁ de la première couche de non-tissé (2) filé-lié à l'épaisseur d₂ de la deuxième couche de non-tissé (3) filé-lié est de 1 : 2 à 1 : 4,
**en ce que** les filaments continus de la première couche de non-tissé (2) filé-lié sont orientés plus fortement dans la direction de la machine (MD) que les filaments continus de la deuxième couche de non-tissé (3) filé-lié,
**en ce que** les filaments continus de la première couche de non-tissé (2) filé-lié présentent un titre de 1,0 à 2,5 den et en ce que les filaments continus de la deuxième couche de non-tissé (3) filé-lié présentent un titre de 1,8 à 2,5 den,
et **en ce que** le diamètre de filament des filaments continus de la première couche de non-tissé (2) filé-lié est inférieur au diamètre de filament des filaments continus de la deuxième couche de non-tissé (3) filé-lié.

11. Laminé selon la revendication 10, **caractérisé en ce que** la masse de l'au moins une première couche de non-tissé (2) filé-lié s'élève à de 30 à 70 % de la masse totale du laminé.

12. Laminé selon la revendication 10 ou 11, **caractérisé en ce que** les filaments continus de la première couche de non-tissé (2) filé-lié présentent un titre de 1,2 à 2 den.
